# EUROPEAN PATENT APPLICATION

(11) **EP 2 189 893 A1**
(43) Date of publication of application: **26.05.2010**
(21) Application number: 08305820.6
(22) Date of filing: 21.11.2008
(51) Int. Cl.: G06F 3/06

(54) **Data storage system and method of operation**

(71) Applicant: Thomson Licensing, 92443 Issy-les-Moulineaux Cedex (FR)
(72) Inventor: Maas, Johann, 30853 Langenhagen (DE); Kochale, Axel, 31832 Springe (DE); Abeling, Stefan, 29690 Schwarmstedt (DE)
(74) Representative: Thies, Stephan

(57) **Abstract**

The present invention relates to a data storage system (100). A data storage system (100) according to the invention comprises a shared memory (110) that stores file system data and a processor (102) that is adapted to perform control functions and file system management functions using file system data stored in the shared memory (110). A data storage system (100) according to the invention further comprises a packet arbiter (124) that receives data from a source external to the data storage system (100) and an I/O scheduler (122) that schedules I/O operations on the data received by the packet arbiter (124) using file system data stored in the shared memory (110) autonomously with respect to the processor (102). Methods according to the invention relate to operating a data storage system.

## Description

The present invention relates to the field of data storage systems. In particular, exemplary embodiments of the present invention relate to improving the efficiency of data retrieval and storage in data storage systems.

The market for network attached storage, referred to as "NAS" herein, and file servers is currently growing rapidly. This market is expected to grow even faster in the near and middle term future because NAS-devices are coming to be seen as an important part of home networks. Compared to universal servers or PC systems, the dedicated architecture of NAS-systems gives them real performance advantages in executing special file serving tasks. This leads to a high degree of efficiency in terms of response time, streaming bandwidth and data security, while keeping the form factor small, and power consumption moderate. Additionally, state-of-the-art NAS devices increasingly offer more sophisticated functions than just file serving. Examples of these other functions include automated backup solutions, encryption, web and/or print server functionality and the like. However, most of the existing NAS solutions still require the utilization of one or more powerful processors - not only for controlling but also for data processing jobs. Also, managing the basic functions of a NAS system including file system maintenance, file I/O, network communication and the like, and advanced functions, including backup automation, encryption and the like, typically require the intelligence of an operating system.

Regardless of whether a system is configured as a standalone server with a dedicated RAID-controlled storage system or configured to employ a network attached storage-head, or NAS-head, in conjunction with a SAN, system requirements may include the ability to withstand very high traffic loads. The processors currently available are usually fast enough to serve the available bandwidths, but processors may not be able to effectively support upcoming technologies such as 10Gbit Ethernet and storage domains employing solid state disks. In a server environment utilizing a 10Gbit Ethernet link and a powerful redundant array of inexpensive disks or RAID system, state-of-the-art CPUs may be ineffective for supporting high traffic speeds.

The skilled person will appreciate that the sequential execution of programs on a CPU is inherently slower than parallel data processing using functions implemented in hardware logic. However, the complexity of parallel hardware makes it very unlikely to create a fully functioning file server completely in hardware using known technology. Therefore, it is likely that foreseeable generations of NAS servers will utilize both hardware and software elements. However, the interconnected relationship between file system metadata and file system functions makes it very difficult to cleanly separate functions that could be offloaded to hardware modules. In addition, the close relationship between file system functions and superordinated networking file system tasks adds to this difficulty.

U.S. Patent No. 5,802,366 to Row, et al. purports to disclose a parallel I/O network file server architecture. The disclosed file server architecture comprises as separate processors, a network controller unit, a file controller unit and a storage processor unit. These units incorporate their own processors, and operate in parallel with a local Unix host processor. All networks are connected to the network controller unit, which performs all protocol processing up through the network file system or NFS layer. The virtual file system is implemented in the file control unit, and the storage processor provides high-speed multiplexed access to an array of mass storage devices. The file controller unit controls file information caching through its own local cache buffer, and controls disk data caching through a large system memory which is accessible on a bus by any of the processors.

U.S. Patent Application Publication No. 20060069884 to Kim, et al. purports to disclose a network to device bridge chip that enables a network directly attached device. The disclosed network bridge circuit, logic, chip, and method allegedly enable a host computer to access a storage device or a plurality of storage devices directly from the network. A hardware architecture includes a protocol layer handler, DMA, a storage device interface, a command execution unit, and an optional error handler. A bridge circuit logic is implemented on a single chip in hard wired fashion without resorting to a programmable architecture. A generic command wrapper in which new commands may be added at a later time than the time of fabrication of the hardware chip can be executed without revising the hardware chip. The bridge apparatus enables direct access by at least one host to a raw storage device over a network. The bridge apparatus comprises a command execution unit, a memory controller, a network interface, a device interface controller. The bridge apparatus couples the raw storage device to the network directly such that the host accesses the raw storage device as if it was a local storage device even though it is only available over the network.

U.S. Patent Application Publication No. 20040139168 to Tanaka, et al. purports to disclose a SAN/NAS integrated storage system. The storage system is directly connected to a network, if conventional interfaces and protocols are used. When an I/O command issued from a file server is transmitted to the storage system, the command/data is serially transferred via a single transfer path so that the performance is lowered. Conventional interfaces allegedly do not provide the means to notify the storage system of a failure at the file server. The file server and a channel adapter of the storage system are mounted on the same board and connection paths therebetween are controlled so that a plurality of protocols can be operated independently. A path independent from a command/data path is provided between the file server and channel adapter, and the received failure information is stored in a shared memory of the storage system and used for a fail-over operation.

International Patent Application Publication No. W002054266 to Kim, et al. purports to disclose a disk system adapted to be directly attached to a network. A network-attached disk or NAD system is includes a NAD device for receiving a disk access command from a host through a network, and a device driver at the host for controlling the NAD device through the network, where the device driver creates a virtual host bus adapter so that the host recognizes the NAD device as if it is a local device to the host. The host may run the UNIX or Windows family of operating systems. The NAD device includes a disk for storing data, a disk controller for controlling the disk, and a network adapter for receiving a disk access command from the host through a network port.

An improved data storage system and method of operation is desirable.

A data storage system according to the invention is set forth in claim 1. The data storage system comprises a shared memory that stores file system data and a processor that is adapted to perform control functions and file system management functions using file system data stored in the shared memory. A data storage system according to the invention further comprises a packet arbiter that receives data from a source external to the data storage system and an I/O scheduler that schedules I/O operations on the data received by the packet arbiter using file system data stored in the shared memory autonomously with respect to the processor.

The file system data may comprise metadata. In a data storage system according to the invention, the shared memory may store the file system data in the form of a plurality of tables. The plurality of tables may comprise at least one of a file handle table, a jobs table, a file allocation table blocks table, or a cache table. The data received by the packet arbiter comprises Ethernet frames

A method of operating a data storage system according to the invention is set forth in claim 9. The method comprises storing file system data in a shared memory and performing control functions and system management functions with a processor that uses file system data stored in the shared memory. The method according to the invention further comprises receiving data from a source external to the data storage system via a packet arbiter and scheduling I/O operations on the data received via the packet arbiter using file system data stored in the shared memory autonomously with respect to the processor.

In a method according to the invention, the file system data may comprise metadata. The file system data may be stored in the form of a plurality of tables. The plurality of tables may comprise at least one of a file handle table, a jobs table, a file allocation table blocks table, or a cache table.
**Fig.** 1 is a block diagram of a hardware accelerated file server in accordance with an exemplary embodiment of the present invention.
**Fig. 2** is a block diagram showing a memory map of shared memory in accordance with an exemplary embodiment of the present invention.
**Fig. 3** is a block diagram showing table structures for shared memory segments in accordance with an exemplary embodiment of the present invention.
**Fig. 4** is a process flow diagram showing a method of operating a packet arbiter in accordance with an exemplary embodiment of the present invention.
**Fig. 5** is a process flow diagram showing a method of operating an I/O scheduler in accordance with an exemplary embodiment of the present invention.

An exemplary embodiment of the present invention is adapted to relieve a bottleneck attributable to insufficient processing power of CPUs by offloading the data intensive tasks, such as serving read/write requests on files to hardware logic. One of the characteristics of an exemplary embodiment of the present invention may include a circumstance in which the offloaded functions run completely autonomously without any invocation of the controlling CPU. Moreover, an exemplary embodiment of the present invention may facilitate more efficient operation of file servers by splitting and offloading computationally intensive file system tasks to hardware logic.

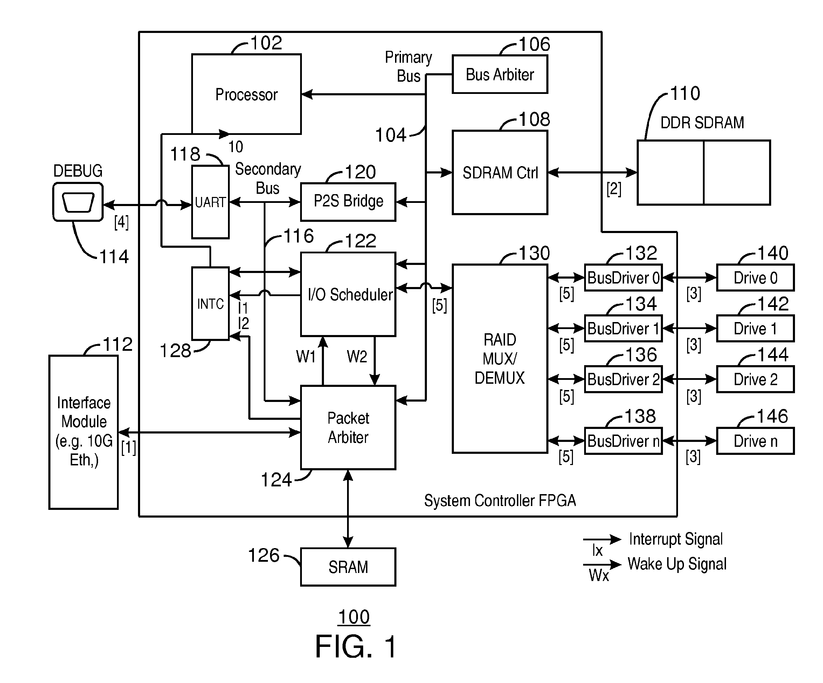

**Fig. 1** is a block diagram of a hardware accelerated file server in accordance with an exemplary embodiment of the present invention. The accelerated file server, which comprises a data storage system, is generally referred to by the reference number 100. The accelerated file server 100 includes a processor 102, which may be referred to as a PowerPC or PPC herein. The processor 102 is connected to various system components by a primary bus 104. The protocol of the primary bus 104 may be readily determined by the skilled person based on individual system design requirements. In one exemplary embodiment of the present invention, the primary bus 104 comprises a Processor Local Bus or PLB as specified by International Business Machines. Traffic on the primary bus 104 is arbitrated by a bus arbiter 106.

The accelerated file server 100 comprises an SDRAM controller 108, which may be coupled to an SDRAM memory 110. Under control of the processor 102, the SDRAM controller 108 may store data to and retrieve data from the SDRAM memory 110 to facilitate operation of the accelerated file server 100. As set forth in detail below, the SDRAM memory 110 may be shared by multiple components of the accelerated file server 100. Moreover, the SDRAM memory 110 may store file system data that is used by multiple system components.

The accelerated file server 100 may comprise an interface module 112, which may be used to allow the transfer of data to and/or from an external device. In one exemplary embodiment of the present invention, the interface module comprise a 10Gbit Ethernet adapter. The accelerated file server 100 may additionally comprise a debug input 114 to allow troubleshooting of errors or other problems.

In addition to the primary bus 104, some components of the accelerated file server 100 are connected to each other via a secondary bus 116. The secondary bus 116 may be a relatively slow transport medium such as the On-Chip Peripheral Bus or OPB specified by International Business Machines. In the exemplary embodiment of the present invention shown in Fig. 1, a UART 118 is connected between the secondary bus 116 and the debug input 114. The secondary bus 116 is connected to the primary bus by a P2S bridge 120. The P2S bridge 120 may be adapted to account for the difference in throughput between the primary bus 104 and the secondary bus 116.

An I/O scheduler 122 is connected to the secondary bus 116. The I/O scheduler 122 may be adapted to control I/O operations performed by the accelerated file server 100. The I/O scheduler 122 is connected to a packet arbiter 124, which is adapted to receive data via the interface module 112. The packet arbiter 124 may be adapted to buffer data in an SRAM memory 126. An interrupt controller 128, which is labeled "INTC" in Fig. 1, is connected to the I/O scheduler 122 and the packet arbiter 124. The interrupt controller128 may be adapted to provide an interrupt signal generated by the I/O scheduler 122 to the processor 102.

The I/O scheduler 122 is adapted to deliver data to a RAID multiplexer/demultiplexer 130. The RAID multiplexer/demultiplexer 130 is connected to a plurality of BusDriver modules 132, 134, 136, 138. In turn, each of the BusDriver modules 132, 134, 136, 138 is connected to a corresponding disk drive. In the exemplary embodiment shown in Fig. 1, the BusDriver 132 is connected to a disk drive 140. The BusDriver 134 is connected to a disk drive 142. The BusDriver 136 is connected to a disk drive 144. The BusDriver 138 is connected to a disk drive 146.

In an exemplary embodiment of the present invention, at least the processor 102, the I/O scheduler 122 and the packet arbiter 124 have access to the primary bus 104. The primary bus 104 in turn has access to the SDRAM memory 110 via the SDRAM controller 108. The processor 102, the I/O scheduler 122 and the packet arbiter 124 may each be adapted to initiate bus transfers by acting as bus masters. The SDRAM controller 108 may be operated as a bus slave. In an exemplary embodiment of the present invention, the primary bus 104 is adapted to transport many gigabits of data per second.

The processor 102, the I/O scheduler 122 and the packet arbiter 124 may each incorporate "wake-up" mechanisms that allow them to activate each other if requests need to be processed. The waking up may be performed either by toggling predetermined signal lines, or by writing specified values to module registers using the secondary bus 116.

The skilled person will appreciate that two or more functional blocks shown in Fig. 1 may be implemented in a single integrated circuit device. For example, the processor 102, the I/O scheduler 122, the packet arbiter 124 and the BusDrivers 132, 134, 136, 138 may all be implemented on a single field-programmable gate array or FPGA. Moreover, an exemplary embodiment of the present invention eliminates the need for relatively powerful CPUs in file server systems. This may lead to a smaller number of stand-alone processing elements in a NAS device. In turn, this enables the ability to design products having a smaller form factor. In addition, an exemplary embodiment of the present invention may lower response delays and increase available bandwidth when executing file I/O requests on file servers. Power consumption of NAS devices may also be reduced if system components are implemented using application specific integrated circuit or ASIC technology.

In an exemplary embodiment of the present invention, a preselected set of file system metadata is shared between a controlling instance such as the processor 102 and several hardware logic modules. The availability of file system metadata to both, functions implemented in hardware and a file system manager running in software, leads to a file server architecture that combines the speed of tasks executed in hardware with the flexibility and complexity of functions performed in software. With other words, an exemplary embodiment of the present invention enables offloading of frequent and time consuming but relatively simple tasks, such as writing or reading of data to/from files to the disk drives 140, 142, 144, 146 to dedicated parallel data processing units implemented in hardware. In the exemplary embodiment of the present invention, the parallel data processing units comprise the BusDrivers 132, 134, 136, 138. Moreover, the parallel processing units can handle read/write requests on files sent from a client computer autonomously via the interface module 112 without any interference of the controlling instance such as the processor 102.

In an exemplary embodiment of the present invention, system controlling functions and file system management functions, such as creation, deletion and renaming of files and directories are still performed by the processor 102. In such a system the power of the processor 102 can be relatively low because the computationally intensive requests are redirected to the parallel hardware modules.

In an exemplary embodiment of the present invention, file system metadata is shared between multiple hardware processing units such as the processor 102, the I/O scheduler 122 and the packet arbiter 124. The metadata may be shared according to a specific protocol or scheme. Processing of I/O requests may be performed autonomously in hardware logic without use of a higher level processor. The processor, however, may be adapted to retain the full spectrum of control functions.

As set forth above, the packet arbiter 124 receives data frames from an interface module 112 such as a 10Gbit Ethernet card. The packet arbiter 124 decodes and parses frame headers. The data frames may be stored to predefined locations in one of the memory devices of the accelerated file server 100. For example, the data frames may be delivered to the SDRAM controller 108 via the primary bus 104 and stored in the SDRAM memory 110. The location in which data frames are stored may depend on whether the frame was identified as a part of a file read/write operation or not. Similarly, the packet arbiter 124 may be adapted to fetch outgoing packets from the SDRAM memory 110, to encode them to Ethernet frames and to send them out via the interface module 112. The packet arbiter 124 may buffer incoming frames in the SRAM memory 126 if immediate access to the primary bus 104 is not available.

The I/O scheduler 122 may be adapted to prepare, schedule, control and perform I/O requests on storage originating either from the processor 102 or directly from network clients via the interface module 112. Like the processor 102 and the packet arbiter 124, the I/O scheduler 122 may be adapted to access shared areas in the SDRAM memory 110 via the primary bus 104 and the SDRAM controller 108. The I/O scheduler 122 is responsible for multiplexing/demultiplexing transferred data to or from the BusDrivers 132, 134, 136, 138 via the RAID multiplexer/demultiplexer 130. The BusDrivers 132, 134, 136, 138 in turn, communicate the requests and associated data to/from single serial or parallel ATA interfaced storage devices such as their associated disk drive 140, 142, 144, 146.

For each file I/O request, the I/O scheduler 122 may be adapted to look up the targeted file using shared file system metadata, to locate the requested file offset on storage by reading and parsing shared file system tables such as a file allocation table or FAT, and to translate the request into a series of addressable file system blocks. In addition, the I/O scheduler 122 may allocate memory in shared file system tables, if necessary, and perform the requested I/O operation on storage.

In the exemplary embodiment shown in Fig. 1, the processor 102 is adapted to run an embedded operating system and is responsible for system controlling, file system management, communication maintenance and the like. The processor 102 is also adapted to perform all other more sophisticated but rarely invoked functions performed by NAS devices.

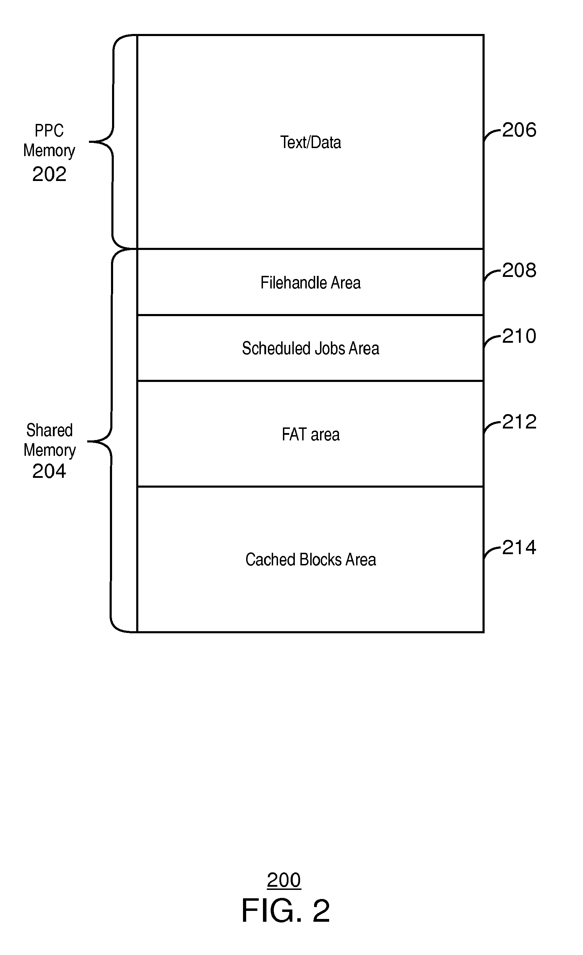

**Fig. 2** is a block diagram showing a memory map of shared memory in accordance with an exemplary embodiment of the present invention. The memory map is generally referred to by the reference number 200. The memory map 200 shows one exemplary way in which to apportion the SDRAM memory 110 shown in Fig. 1 so that it may be shared by system components such as the processor 102, the I/O scheduler 122 and the packet arbiter 124.

The memory map 200 includes a processor memory 202 and a shared memory 204. The processor memory 202 is accessible only by the processor 102 and not by other system components. The processor memory 202 may comprise a TextData region 206. The TextData region 206 may be used to store information needed by the processor 102 such as program code and dynamic data. The skilled person will appreciate that the processor memory 202 does not necessarily reside in the same SDRAM module as the shared memory 204. Moreover, the processor memory 202 may reside in a separate memory chip connected to an additional primary bus instead. Such an arrangement may be advantageous for very high speed applications.

The shared memory 204 may comprise a number of shared memory segments that are each accessible by multiple components of the accelerated file server 100. In the exemplary embodiment shown in Fig. 2, the shared memory 204 comprises a file-handle area 208, a scheduled jobs area 210, a FAT area 212 and a cached blocks area 214. Each area within the shared memory 204 may have the structure of strictly defined tables. The structure may take into account the requirement to keep memory management functions as simple as possible because limited logic resources typically do not allow the implementation of advanced memory management techniques in hardware.

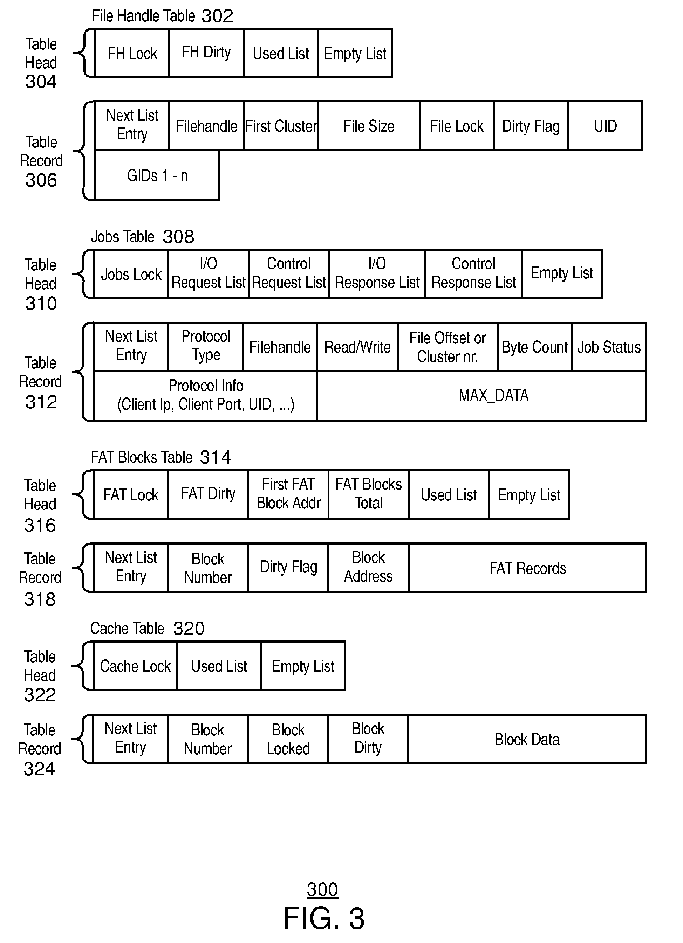

**Fig. 3** is a block diagram showing table structures for shared memory segments in accordance with an exemplary embodiment of the present invention. The diagram is generally referred to by the reference number 300.

In an exemplary embodiment of the present invention, each segment of the shared memory 204 starts with a table head that provides some general information about contents and state of the associated table. Each table head may contain a locking field. The locking field protects the table contents from getting damaged. This is necessary because pseudo-concurrent read/write accesses to the same table row originating from different instances can result in reading partly modified values. An exemplary locking algorithm executed by each sharing instance before starting with reading/writing table contents may comprise reading the locking field in a loop until the value in that field is set to zero, meaning that no other task is accessing the table. Then, an own ID can be stamped to a locking variable address, signaling to other tasks that the table has been locked. Finally, the value is read again to verify that it corresponds to the correct own ID. Depending on comparison results, the requesting instance can either go on with reading/writing table contents or must start the locking algorithm anew. This locking scheme floods the primary bus with many RAM operations. Therefore it is possible to replace it by a hardware logic module residing directly on a system controller chip, which would unload the bus, and additionally allow for a much faster switching between tasks.

In one exemplary embodiment of the present invention, the records of all tables have a constant, predefined size. This enables direct addressing of single records without having to parse the whole table. Each record may be part of a linked list and incorporates a pointer to the next entry in the list. The first entry for all lists in a table may be found in the corresponding table head. By definition, the tables may have one or more predefined lists with records in use and one list linking all currently unused records. This makes the allocation and freeing of records simple, and keeps the managing algorithms plain.

The diagram 300 shows a file handle table 302 having a file handle table head 304 and a file handle table record 306. In the exemplary embodiment shown in Fig. 3, the file handle table head 304 and the file handle table record 306 each contain a plurality of data elements. The specific data elements contained in the file handle table head 304 and the file handle table record 306 are subject to specific system design requirements. The selection of those data elements is within the capability of the skilled person.

The file handle table 302 provides the identifying part of file system metadata to all participating hardware modules. The central part is the file handle entry that allows the unique identification of all files in a given system. The usage of file handles as a short and universal reference to a file is common for almost all network file system protocols currently available. Therefore, the use of an exemplary embodiment of the present invention is not limited to a particular file access protocol. Indeed, such an exemplary embodiment relates to a universal method for sharing file system metadata between several processing instances. Fortunately, the strictly specified form of all file handles belonging to the same network protocol makes it easy to compare and operate with them in hardware. The skilled person will appreciate that the creation and maintenance of file handles is a relatively complex task and is typically implemented in software. In general, this means that the operating system executed by the processor 102 should be adapted to initialize the file handle table 302 at mount time, and to update the table records each time a file is created, looked up or removed.

In one exemplary embodiment of the present invention, the operating system also provides additional metadata for each record, such as the file's first cluster address, file size and user and group IDs describing the file owner. The conjunction between file handle and the file's first cluster address allows for very quick and rather simple localization of file contents on storage that can be implemented in hardware. This is done in the I/O scheduler 122, which may use the file handle table 302 as the first instance for looking up file I/O requests. Autonomous processing of read/write requests in hardware may also allow that the I/O scheduler 122 can independently allocate storage for a file and increase the file's size. If the I/O scheduler 122 changes the size of a file, it should desirably update the corresponding record in the file handle table 302. The I/O scheduler 122 may also set the dirty flag of the record, as shown in a dirty flag area of the file handle table record 306. Upon marking the table dirty, the I/O scheduler 122 may be adapted to wake up a task in the operating system, such that it can synchronize the changed records with its internal copy of file system metadata.

In order to prevent unauthorized access to files, the I/O scheduler122 may be adapted to compare the security information such as user and group IDs provided with each read/write request received over a network link with the data in the corresponding record of the file handle table record 306. Thus, depending on comparison results, the I/O scheduler 122 can reject suspicious requests.

The diagram 300 shows a jobs table 308 having a jobs table head 310 and a jobs table record 312. In the exemplary embodiment shown in Fig. 3, the jobs table head 310 and the jobs table record 312 each contain a plurality of data elements. The specific data elements contained in the jobs table head 310 and the jobs table record 312 are subject to specific system design requirements. The selection of those data elements is within the capability of the skilled person.

In an exemplary embodiment of the present invention, the records in the jobs table 308 represent a universal description of messages exchanged between the processor 102, the I/O scheduler 122 and the packet arbiter 124. The content of these messages may differ depending on which instance it was sent from and whether the message is generated as a result of an I/O request or not. An overview of the possible message contents and their handling by an exemplary embodiment of the present invention is set forth below in Table 1:

**Table 1**

| Message contents/source | Action/response |
|---|---|
| The content originates from a network client, i.e. the message was created by the packet arbiter 124. | ○ The packet arbiter 124 has recognized a file I/O request. In this case the table record is composed as shown in Fig. 3. In particular, the table record contains all information required to perform a read/write operation on a file including file handle, read or write indicator, file offset and the number of bytes to process. It may also contain some information needed to compose an appropriate response, such as the network protocol type and protocol information such as the client machine's IP and port numbers, security information and other identifiers. The packet arbiter 124 may be adapted to attach such a "job" to the "IO request list", meaning the request can be processed autonomously in hardware. ○ The packet arbiter 124 has not recognized a file I/O request. In one exemplary case, an Ethernet frame is copied completely to an empty table record and the record is linked to the "Control request list", meaning the frame is to be processed by the controlling instance, i.e. the operating system. |
| The message originates from the processor 102. | ○ The message is a file I/O request. In this case the operating system formats the table record as shown in Fig. 3 using dummy protocol information and to attach the record to the I/O request list. ○ The message is just an I/O request on storage, not addressing any particular file. Such requests are necessary for reading/storing file system metadata, such as bitmap tables or the superblock. In this case, the table record need only be initialized with the cluster number, the read/write flag, and, if available, the data to transfer. The record may be attached to the I/O request list. ○ The message is an Ethernet frame. Such frames will be attached to a Control Response list and transferred by the packet arbiter 124 to one of the client machines on network. |
| A message is modified by the I/O scheduler 122. | The I/O scheduler 122 never produces messages by itself. Instead, the I/O scheduler 122 executes requests on the I/O request list. If necessary, the I/O scheduler 122 copies the data into a message body, adjusts a job status flag, and moves the job to an I/O response list. |

In order to support both the user datagram protocol or UDP and the transmission control protocol or TCP network protocols as transport medium for file IO requests, the packet arbiter 124 is desirably adapted to compose several TCP segments possibly comprising one request. The jobs table 308 can be used as a buffer for collecting the TCP fragments belonging to the same request. For this purpose, the packet arbiter 124 allocates a table record, moves it to the I/O request list, but marks the request as incomplete by writing a predefined value to a job status field of that record. As soon as all components of the request have been received, the packet arbiter 124 releases the request for processing by giving the job a different status.

The diagram 300 shows a FAT blocks table 314 having a FAT blocks table head 316 and a FAT blocks table record 318. In the exemplary embodiment shown in Fig. 3, the FAT blocks table head 316 and the FAT blocks table record 318 each contain a plurality of data elements. The specific data elements contained in the FAT blocks table head 316 and the FAT blocks table record 318 are subject to specific system design requirements. The selection of those data elements is within the capability of the skilled person.

The FAT blocks table 314 maintains information about which file system blocks are assigned to which files. The exemplary file system employed here is FAT. The file allocation method employed by a FAT file system employs relatively lean algorithms required to localize file contents. This simplicity facilitates implementation of these algorithms in hardware logic.

The skilled person will appreciate that it is not always possible to keep all file allocation table records in memory at the same time in a FAT file system. Accordingly, an exemplary embodiment of the present invention may be adapted to load FAT pieces on demand, keeping only a subset of the whole table in memory at a time. To implement this, each record in the FAT blocks table 314 represents one piece or block of the FAT on storage. Correspondingly, all of the non-empty records typically need to be associated with a block number on storage, such as with a block number field. The hardware module must also have information about where to find the FAT blocks on storage. This information is written by the processor 102 to the FAT blocks table head 316 and may include a first FAT block address and a FAT blocks total when initializing shared memory segments. Having this information, the I/O scheduler 122 can reload and discard FAT pieces dynamically, such that stepping through the whole FAT is possible. In an exemplary embodiment of the present invention, the file handle table 302 only gives an initial idea of where to find the first block of a file. By definition, the remaining blocks of the file can be found by stepping through the linked lists in the FAT.

The I/O scheduler 122 may also be adapted to modify the contents of the FAT blocks table 314, such as by allocating additional memory for single files in the FAT. In case one of the records such as a FAT block gets modified, the I/O scheduler 122 must set the dirty flag for that record and synchronize the dirty FAT block with its copy on storage after a certain period of time or on a sync command issued by the processor 102.

The diagram 300 shows a cache table 320 having a cache table head 322 and a cache table record 324. In the exemplary embodiment shown in Fig. 3, the cache table head 322 and the cache table record 324 each contain a plurality of data elements. The specific data elements contained in the cache table head 322 and the cache record 324 are subject to specific system design requirements. The selection of those data elements is within the capability of the skilled person.

Operating systems typically employ internal buffers for intermediate storing of recently accessed file system blocks on storage. This eliminates potentially long run-up delays for reading/writing often requested file system contents characteristic of large capacity storage devices. The same principle may be used for autonomous processing of file I/O requests in hardware. The cache table 320 may serve as a buffer for recently accessed file system blocks. Each non-empty record in the cache table 320 mirrors a file system block on storage. This means that the I/O scheduler 122 can accelerate the execution of I/O requests on often accessed file system contents by dynamically storing and reading recently transferred storage blocks in the cache table 320. In case one of the records such as a file system block gets modified, the I/O scheduler 122 sets the dirty flag for that record and synchronizes the block to storage after a certain period of time or on a sync command issued by processor 102.

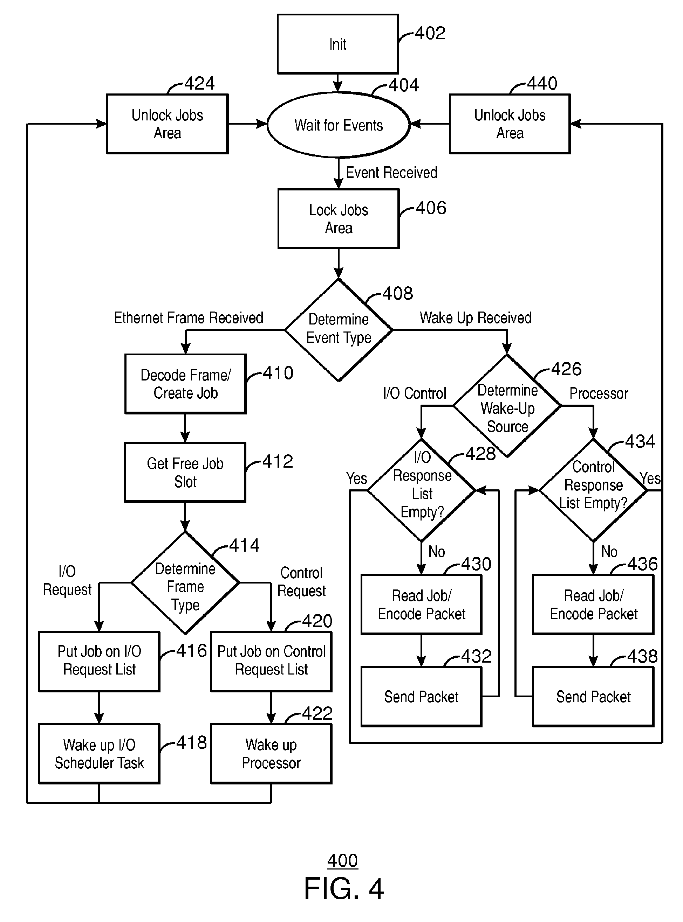

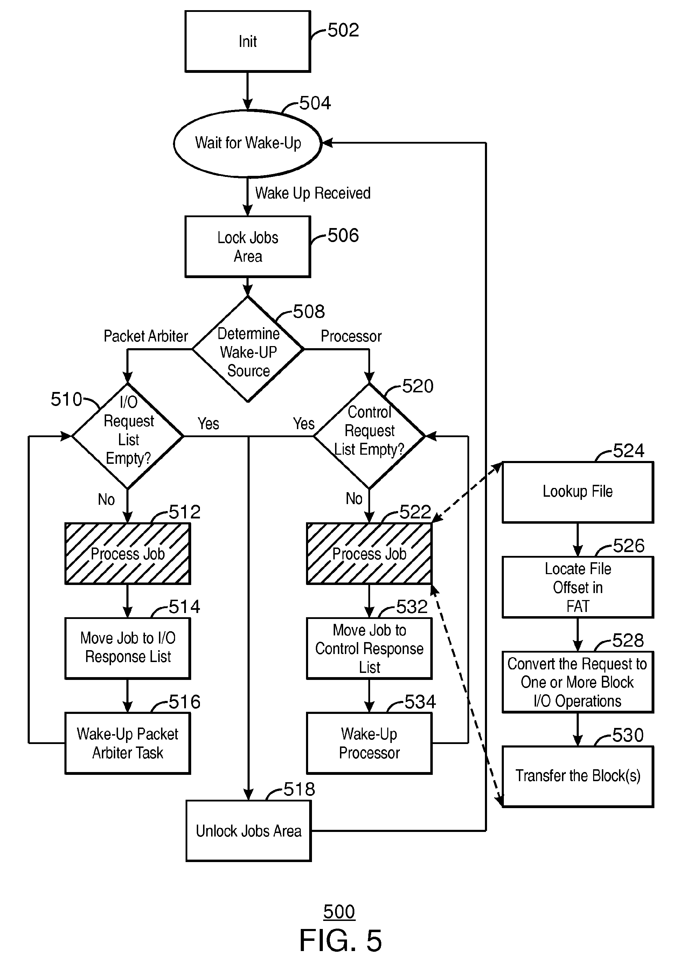

If the operating system running on the processor 102 provides the file system metadata according to contents of the file handle table 302 described above, the processing of file I/O requests could be realized only by utilizing the I/O scheduler 122 and the packet arbiter 124, both implemented in hardware logic. The process flow diagrams shown in Fig. 4 and Fig. 5 are useful in explaining exemplary algorithms that may be implemented by the processor 102, the I/O scheduler 122 and the packet arbiter 124 in accordance with an exemplary embodiment of the present invention.

**Fig. 4** is a process flow diagram showing a method of operating a packet arbiter in accordance with an exemplary embodiment of the present invention. The exemplary method is referred to by the reference number 400. In one exemplary embodiment of the present invention, the method 400 may be performed by the packet arbiter 124 shown in Fig. 1.

At block 402, the packet arbiter 124 is initialized. As shown in Fig. 4, the packet arbiter 124 runs in an endless loop and, in so doing, performs relatively simple functions. Only creation of jobs, encoding/decoding of Ethernet frames and parsing for file I/O requests are of relative complexity. In one exemplary embodiment of the present invention, all functions performed by the packet arbiter 124 can be implemented in hardware without consuming a significant amount of logic resources.

At block 404, the packet arbiter 124 waits for an event. When an event is received, a jobs area of memory is locked, as shown at block 406. At block 408, the received event is identified as either an Ethernet frame received or a wake-up request received.

If the received event is determined to be the receipt of an Ethernet frame, process flow continues to block 410, where the frame is decoded and a corresponding job is created. A free job slot is obtained, as shown at block 412. At block 414, the frame type of the received frame is determined. If the received frame is an I/O request, process flow continues to block 416, where a job is put on an I/O request list. At block 418, a wake-up request is sent to a task scheduler. Process flow continues to block 424, where the jobs area is unlocked. Thereafter, process flow returns to block 404, where the next event is awaited.

If, at block 414, the frame type is determined to be a control request, a job is placed on a control request list, as shown at block 420. A wake-up request is then sent to the processor 102, as shown at block 422. The jobs area is then unlocked, as shown at block 424. Thereafter, process flow returns to block 404, where the next event is awaited.

If, at block 408, the received event is determined to be a wake-up request, the source of the wake-up request is determined, as shown at block 426. If, at block 426, the source of the wake-up request is determined to be an I/O control, a determination is made regarding whether the I/O response list is empty, as shown at block 428. If the I/O response list is determined not to be empty, the next job on the list is read from the jobs table and an ethernet packet is encoded, as shown at block 430. The encoded packet is then sent, as shown at block 432. Thereafter, process flow returns to block 428, where a determination is made regarding whether the I/O response list is now empty.

If, at block 428, the I/O response list is determined to be empty, the jobs area is unlocked, as shown at block 440. Thereafter, process flow returns to block 404, where the next event is awaited.

If, at block 426, the source of the wake-up request is determined to be the processor 102, a determination is made regarding whether a control response list is empty, as shown at block 434. If the control response list is determined not to be empty at block 434, the next job on the list is read from the jobs table and an ethernet packet is encoded, as shown at block 436. The encoded packet is sent, as shown at block 438. Thereafter, process flow returns to block 434, where a determination is made regarding whether the control response list is now empty. If, at block 434, the control response list is determined to be empty, the jobs area is unlocked, as shown at block 440. Thereafter, process flow returns to block 404, where the next event is awaited.

**Fig. 5** is a process flow diagram showing a method of operating an I/O scheduler in accordance with an exemplary embodiment of the present invention. The exemplary method is referred to by the reference number 500. In one exemplary embodiment of the present invention, the method 500 may be performed by the I/O scheduler 122 shown in Fig. 1. The skilled person will appreciate how to implement the functions shown in the method 500 in hardware.

At block 502, the I/O scheduler 122 is initialized. At block 504, the I/O scheduler 122 awaits a wake-up request. When a wake-up request is received, a jobs area is locked, as shown at block 506.

At block 508, the source of the wake-up request is determined. If the wake-up request originated from the packet arbiter 124, a determination is made regarding whether an I/O request list is empty, as shown at block 510. If the I/O request list is not empty, a job is processed, as shown at block 512. An exemplary job of the sort that may be processed is discussed in detail below. The job is then moved to an I/O response list, as shown at block 514. At block 516, a wake-up packet arbiter task is performed. Thereafter, process flow returns to block 510, where a determination is made regarding whether the I/O request list is then empty.

If, at block 510, the I/O request list is determined to be empty, the jobs area is unlocked, as shown at block 518. Thereafter, process flow returns to block 504, where the next wake-up event is awaited.

If, at block 508, the source of the wake-up request is determined to be the processor 102, a determination is made regarding whether a control request list is empty. If the control request list is determined not to be empty, a job is processed, as shown at block 522. In the exemplary embodiment shown in Fig. 5, the job comprises performing a file look-up, as shown at block 524. A file offset is then located in a FAT, as shown at block 526. At block 528, the request is converted to one or more block I/O operations. One or more blocks are then transferred, as shown at block 530.

Upon completion of the job processing, the job is moved to a control response list, as shown at block 532. A wake-up request is then sent to the processor 102, as shown at block 534. Thereafter, process flow returns to block 504, where the next wake-up event is awaited.

The skilled person will appreciate that combining any of the above-recited features of the present invention together may be desirable.

## Claims

1. A data storage system (100), comprising:
- a shared memory (110) that stores file system data;
- a processor (102) that is adapted to perform control functions and file system management functions using file system data stored in the shared memory (110);
- a packet arbiter (124) that receives data from a source external to the data storage system (100); and
- an I/O scheduler (122) that schedules and performs I/O operations on the data received by the packet arbiter (124) using file system data stored in the shared memory (110) autonomously with respect to the processor (102).

2. The data storage system (100) according to claim 1, wherein the file system data comprises metadata.

3. The data storage system (100) according to claims 1 or 2, wherein the shared memory (110) stores the file system data in the form of a plurality of tables.

4. The data storage system (100) according to claim 3, wherein the plurality of tables comprises a file handle table (302).

5. The data storage system (100) according to claim 3, wherein the plurality of tables comprises a jobs table (308).

6. The data storage system (100) according to claim 3, wherein the plurality of tables comprises a file allocation table blocks table (314).

7. The data storage system (100) according to claim 3, wherein the plurality of tables comprises a cache table (324).

8. The data storage system (100) according to any preceding claim, wherein the data received by the packet arbiter comprises Ethernet frames.

9. Method of operating a data storage system (100), the method comprising:
- storing file system data in a shared memory (110);
- performing control functions and system management functions with a processor (102) that uses the file system data stored in the shared memory (110);
- receiving data from a source external to the data storage system (100) via a packet arbiter (124); and
- scheduling and performing I/O operations on the data received via the packet arbiter (124) using the file system data stored in the shared memory (110) autonomously with respect to the processor (102).

10. Method according to claim 9, wherein the file system data comprises metadata.

11. Method according to claims 9 or 10, wherein storing the file system data in the shared memory (110) comprises storing the file system data in the form of a plurality of tables.

12. Method according to claim 11, wherein the plurality of tables comprises a file handle table (302).

13. Method according to claim 11, wherein the plurality of tables comprises a jobs table (308).

14. Method according to claim 11, wherein the plurality of tables comprises a file allocation table blocks table (314).

15. Method according to claim 11, wherein the plurality of tables comprises a cache table (324).
